# EUROPEAN PATENT APPLICATION

(11) **EP 2 763 430 A1**
(43) Date of publication of application: **06.08.2014**
(21) Application number: 13199559.9
(22) Date of filing: 24.12.2013
(51) Int. Cl.: H04N 21/4627, G06F 21/10

(54) **Method and device of processing broadcast contents by verifying authenticity of broadcast contents through network by IPTV**

(30) Priority: 05.02.2013 US 201313759082; 16.05.2013 KR 20130056045
(71) Applicant: Samsung Electronics Co., Ltd, Gyeonggi-do 443-742 (KR)
(72) Inventor: Beskrovny, Evgeny, Israel (IL); Levari, Iris, Israel (IL)
(74) Representative: Instone, Terry

(57) **Abstract**

Provided is a method by which an IPTV processes broadcast contents. The method includes: receiving second contents corresponding to first contents among contents provided through a broadcast network as a user input requesting a reception of the first contents through an IP network is received; determining a similarity between the first contents and the second contents; and determining an authenticity of the first contents on the basis of the determined similarity.

## Description

### BACKGROUND OF THE INVENTION

### 1. Field of the Invention

The present invention relates to a method of processing broadcast contents in IPTV, and a device therefor. In more detail, the present invention relates to a method and device for selectively playing broadcast contents by verifying the authenticity of the broadcast contents.

### 2. Description of the Related Art

Internet protocol television (IPTV) is a device capable of playing broadcast contents received through a broadcast network and also broadcast contents received through an IP network.

Here, contents spoofing is an act in which an illegal provider copies reliable contents and provides them to a user, deceiving the user into thinking that a legal provider is providing the reliable contents.

A widget is a mini application (program) for independently driving a service that a user wants to use immediately. In order to smoothly provide a service that a user wants, the widget may typically provide a graphic user interface. In the IPTV, a user may use the widget to watch specific broadcast contents.

A typical TV receives and plays broadcast contents only through a broadcast network. In order for a broadcast contents provider to provide broadcast contents through a broadcast network, it must pass the criteria of strict broadcasting permission regulated by communications commission. Therefore, a user may think that the broadcast contents received through a broadcast network are provided by reliable providers.

However, recently introduced IPTV receives broadcast contents through an IP network in addition to a broadcast network. When broadcast contents providers provide broadcast contents through an IP network, in most cases, the permission criteria are more relaxed than when broadcast contents are provided through a broadcast network or there are no permission criteria. Accordingly, existing broadcast channel operators and also anyone are able to provide broadcast contents through an IP network.

When broadcast contents are provided through an IP network, the following two cases may be considered. A first case is that a provider providing broadcast contents through a broadcast network provides the same broadcast contents through an IP network, and a second case is that one provider providing broadcast contents receives broadcast contents that are provided from another provider through a broadcast network and processes the received broadcast contents to be provided through an IP network. In some cases, one provider providing broadcast contents through an IP network may not receive broadcast contents provided from another provider through a broadcast network, and may directly generate and provide similar broadcast contents.

When one provider providing broadcast contents through a broadcast network and another provider providing broadcast contents through an IP network are the same, a user may watch the broadcast contents with trust.

However, when one provider receives broadcast contents provided from another provider providing broadcast contents through a broadcast network and processes the received broadcast contents to be provided through an IP network, a user may not trust the broadcast contents.

From the perspective of the user, it is uncertain as to which provider provides broadcast contents when receiving the broadcast contents through an IP network. Accordingly, a user may not completely trust broadcast contents received through an IP network and played.

For example, when watching the Bloomberg TV channel providing financial information and news through an IPTV and a typical TV, the comparison between the IPTV and the typical TV is as follows.

When receiving broadcast contents through a typical TV, since the Bloomberg channel operator, which passed the strict broadcasting permission criteria, transmits the broadcast contents through a broadcast network, a user can trust that the broadcast contents are provided by the Bloomberg channel operator and thus, can make an investment decision based on the user's trust in the broadcast contents (for example, stock information).

However, when an IPTV receives broadcast contents through an IP network, a user downloads a widget providing user interface (UI). The widget is distributed through an app store by a provider, which provides broadcast contents through a broadcast network. However, anyone can distribute a widget through an app store and an IP network. Accordingly, a different operator than the Bloomberg channel operator may provide similar contents by disguising as if it was a legitimate Bloomberg channel operator. Even when a user downloads and views a widget that seems to provide the broadcast contents of the Bloomberg channel through an IP network, it is uncertain that the broadcast contents are provided from the legitimate Bloomberg channel operator. Therefore, a user may decide not to make an investment after viewing the broadcast contents of the Bloomberg channel received through an IP network.

### SUMMARY OF THE INVENTION

According to the present invention there is provided an apparatus and method as set forth in the appended claims. Other features of the invention will be apparent from the dependent claims, and the description which follows.

The present invention provides a method of selectively playing broadcast contents by simply and efficiently determining the authenticity of the broadcast contents received through an IP network in an IPTV and a device therefore.

According to an aspect of the present invention, there is provided a method of processing broadcast contents, the method including: receiving second contents corresponding to first contents among contents provided through a broadcast network as a user input requesting a reception of the first contents through an IP network is received; determining a similarity between the first contents and the second contents; and determining an authenticity of the first contents on the basis of the determined similarity.

The method may further include, when it is determined that the first contents are forged, playing the second contents instead of the first contents that a user requests.

The method may further include, when it is determined that the first contents are forged, outputting a message indicating that the first contents are forged.

The method may further include, when it is determined that the first contents are forged, outputting a message asking a user whether to play the second contents instead of the first contents.

The determining of the similarity may include determining a similarity between the first contents and the second contents, after excluding additional information generated by at least one of a communication provider, a provider using broadcast channels, a terrestrial broadcast provider, a satellite broadcast provider, a cable broadcast provider, a Digital Multimedia Broadcasting (DMB) provider, an Internet protocol television (IPTV)provider, a provider of the first contents, and a provider of the second contents.

The determining of the similarity may be performed on a basis of metadata of the first contents and metadata of the second contents.

The metadata of the first contents and the metadata of the second contents each may include at least one of a playback time, a program title, copyright information, and a contents source.

The determining of the similarity may be performed on a basis of a similarity between each frame of the first contents and each frame of the second contents.

According to another aspect of the present invention, there is provided a device for processing broadcast contents in an IPTV, the device including: a user interface unit receiving a user input for requesting a reception of first contents through an IP network; an IP network interface unit receiving the first contents through the IP network; a broadcast network interface unit receiving second contents corresponding to the first contents among contents provided through a broadcast network; a determination unit determining a similarity between the first contents and the second contents; and a contents authenticity determining unit determining an authenticity of the first contents on the basis of the determined similarity.

The device may further include an output unit playing and outputting the second contents instead of the first contents that a user requests when it is determined, based on the determination of the authenticity, that the first contents are forged.

The device may further include an output unit outputting a message indicating that the first contents are forged when it is determined, based on the determination of the authenticity, that the first contents are forged.

The device may further include an output unit outputting a message asking whether to play the second contents instead of the first contents to a user when it is determined, based on the determination of the authenticity, that the first contents are forged.

The determination unit may determine a similarity between the first contents and the second contents, after excluding additional information generated by at least one of a communication provider, a provider using broadcast channels, a terrestrial broadcast provider, a satellite broadcast provider, a cable broadcast provider, a Digital Multimedia Broadcasting (DMB) provider, an Internet protocol television (IPTV) provider, a provider of the first contents, and a provider of the second contents.

The determination unit may determine the similarity on a basis of metadata of the first contents and metadata of the second contents.

The metadata of the first contents and the metadata of the second contents each may include at least one of a playback time, a program title, copyright information, and a contents source.

The determination unit may determine the similarity on a basis of a similarity between each frame of the first contents and each frame of the second contents.

### BRIEF DESCRIPTION OF THE DRAWINGS

For a better understanding of the invention, and to show how embodiments of the same may be carried into effect, reference will now be made, by way of example, to the accompanying diagrammatic drawings in which:
FIG. 1 is a conceptual diagram of when an IPTV receives broadcast contents through a broadcast network or an IP network according to a related art;
FIG. 2 is a flowchart illustrating a method of processing broadcast contents according to an embodiment of the present invention;
FIG. 3 is a view of when broadcast contents including an added advertisement are received in an IPTV and displayed to a user according to an embodiment of the present invention;
FIG. 4 is a view of when broadcast contents including an added symbol are received in an IPTV and displayed to a user according to an embodiment of the present invention;
FIG. 5 is a view illustrating a screen outputting a message when it is determined that broadcast contents received through an IP network are forged according to an embodiment of the present invention;
FIG. 6 is a view illustrating a screen outputting a message when it is determined that broadcast contents received through an IP network are forged according to an embodiment of the present invention;
FIG. 7 is a view illustrating a screen playing broadcast contents received through a broadcast network when it is determined that broadcast contents received through an IP network are forged according to an embodiment of the present invention;
FIG. 8 is a view illustrating a structure of metadata representing broadcast contents according to an embodiment of the present invention; and
FIG. 9 is a view illustrating a device processing broadcast contents according to an embodiment of the present invention.

### DETAILED DESCRIPTION OF THE INVENTION

Hereinafter, embodiments of the present invention will be described in more detail with reference to the accompanying drawings, in order to allow those skilled in the art to easily realize the present invention. The present invention may be realized in different forms, and is not limited to the embodiments described herein. Moreover, detailed descriptions related to well-known functions or configurations will be ruled out in order not to unnecessarily obscure subject matters of the present invention. Like reference numerals refer to like elements throughout.

Hereinafter, it is assumed that broadcast contents can be trusted because broadcast contents provided through a broadcast network are transmitted after meeting strict permission criteria.

Hereinafter, it is assumed that there are broadcast contents provided through a broadcast network in correspondence to broadcast contents provided through an IP network.

Hereinafter, a broadcast network excludes an IP network and is a network through which contents are transmitted in one direction via a typical wired/wireless medium such as a radio signal and a cable. Examples of the broadcast network include a terrestrial network, a satellite network, a cable network, and a Digital Multimedia Broadcasting (DMB) network.

Hereinafter, an intermediary provider is a provider that delivers broadcast contents to a user by receiving contents from a broadcast contents provider. That is, examples of the intermediary provider include a communication provider, a terrestrial broadcast provider, a satellite broadcast provider, a cable broadcast provider, a DMB provider, and an IPTV provider. Among them, a provider delivering broadcast contents to a user through an IP network is called an IP network intermediary provider, and a provider delivering broadcast contents to a user through a network other than the IP network is called a broadcast network intermediary provider.

Hereinafter, a broadcast contents provider is a provider providing broadcast contents such as an IPTV contents provider and a provider using broadcast channels (for example, a program provider).

Hereinafter, a user is an IPTV viewer.

Hereinafter, embodiments of the present invention will be described in more detail with reference to the accompanying drawings.

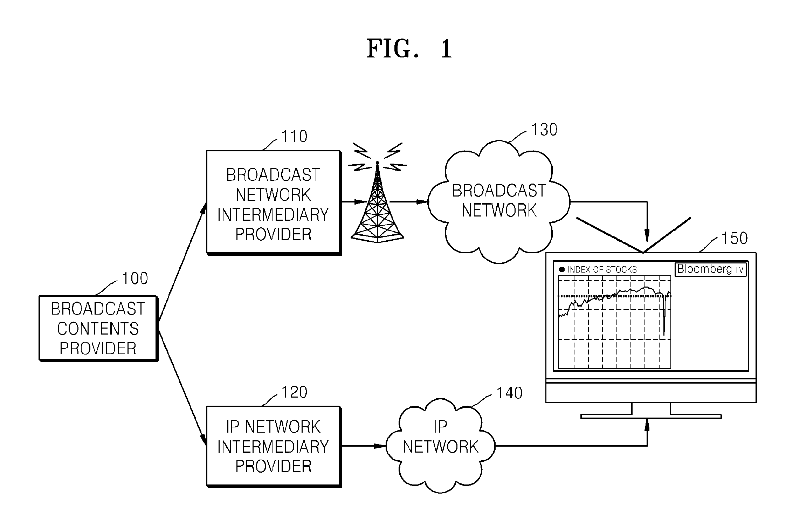

FIG. 1 is a conceptual diagram of when an IPTV receives broadcast contents through a broadcast network or an IP network according to a related art.

As shown in FIG. 1, the IPTV 150 may receive broadcast contents through a broadcast network 130 or an IP network 140. Accordingly, there may be two methods of providing broadcast contents to a user of the IPTV 150. One method is to provide broadcast contents through the broadcast network 130, and the other method is to provide broadcast contents through the IP network 140. A provider 100 providing broadcast contents through the broadcast network 130 may be a provider using broadcast channels. When trying to provide broadcast contents through the broadcast network 130, the broadcast contents provider 100 needs to meet the criteria of strict broadcast permissions required by the communications commission. The broadcast contents provider 100 may deliver broadcast contents to the broadcast network intermediary provider 110 once meeting the criteria of broadcast permission. The broadcast network intermediary provider 110 transmits/receives broadcast contents through the broadcast network 130. In some cases, the broadcast network intermediary provider 110 and the broadcast contents provider 100 may be the same.

A provider providing broadcast contents through the IP network 140 may be a provider using broadcast channels. Since broadcast contents provided through the IP network 140 do not need to meet the strict legal criteria, unlike broadcast contents provided through the broadcast network 130, any provider may provide broadcast contents through the IP network 140. Accordingly, when broadcast contents are provided through the IP network 140, a user is exposed to contents spoofing, i.e., an act in which a provider different from a legal provider providing broadcast contents through the broadcast network 130 provides broadcast contents to the user while deceiving the user into thinking that the legal provider is providing reliable contents.

Accordingly, when broadcast contents are provided through the IP network 140, a user may not know whether the broadcast contents are provided from the broadcast contents providers 100 providing broadcast contents through the broadcast network 130 or a provider different from the broadcast contents provider 100.

The IP network intermediary provider 120 may receive broadcast contents from the broadcast contents provider 100 and provide them through an IP network. In some cases, the broadcast contents provider 100 may directly provide broadcast contents through an IP network without passing through the IP network intermediary provider 120.

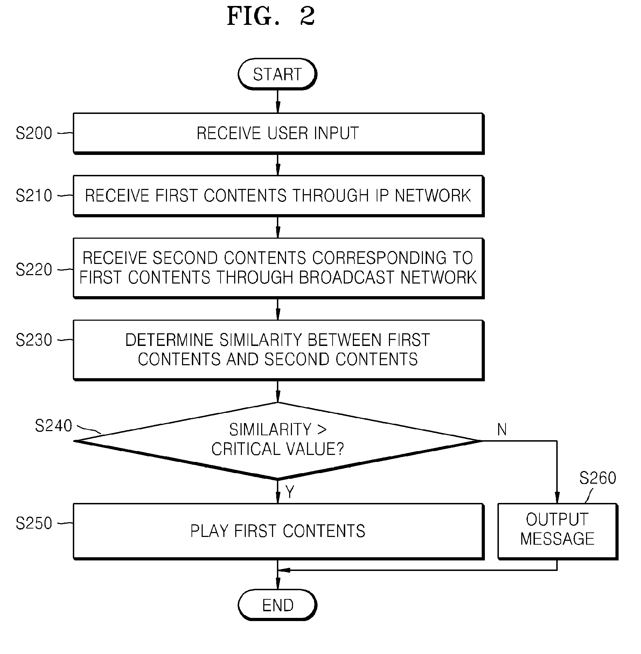

FIG. 2 is a flowchart illustrating a method of processing broadcast contents according to an embodiment of the present invention.

In this embodiment, first contents are assumed as broadcast contents received through the IP network 140 and second contents are assumed as broadcast contents received through the broadcast network 130 in correspondence to the first contents.

In operation S200, an input on whether to receive first contents through an IP network is received through a user interface. Such a user interface may be provided by a widget. The widget may be downloaded through an IP network. Additionally, an input may be received from a user through a remote controller or a displayed screen. As a method of receiving an input, there are user's touch input and button input pressed by a user. The method proceeds to operation S210 when an input to receive first contents through an IP network is received from a user. If no input is received, it is necessary to wait until an input to receive first contents through an IP network is received.

In operation S210, the first contents are received through an IP network. After receiving the first contents through the IP network, the method proceeds to operation S220.

In operation S220, second contents corresponding to the first contents are received through a broadcast network.

In operation S230, a similarity between the first contents and the second contents is determined. Before determining the similarity, synchronization between the first contents and the second contents may be made. If synchronization is not properly made, the first contents may not be played without an additional similarity determination. Except for additional information generated by at least one of a communication provider, a provider using broadcast channels, a terrestrial broadcast provider, a satellite broadcast provider, a cable broadcast provider, a DMB provider, an IPTV provider, a first contents provider, and a second contents provider, it is desirable to determine a similarity between the first contents and the second contents. Additionally, the similarity determination may be performed based on metadata of the first contents and the second contents. Especially, the similarity determination may be performed based on at least one of a playback time, a program title, copyright information, and a contents source. Moreover, the similarity determination may be performed based on similarity between each frame of the first contents and each frame of the second contents. Each frame similarity determination may be performed by making a comparison on the basis of a specific pixel in each frame, on the basis of a specific area in each frame, or on the basis of an entire area in each frame. After determining a similarity between the first contents and the second contents, the method proceeds to operation S240.

In operation S240, a similarity value determined in operation S230 and a critical value are compared. The critical value may be predetermined or may be determined by separately receiving an input through an interface. When the similarity value is greater than the critical value, it means that the first contents are similar to the second contents and are not forged. Accordingly, since it is determined that the fist contents are not forged, the method proceeds to operation S250 to play the first contents. However, when the similarity value is less than the critical value, it is determined that the first contents are forged, and thus the method proceeds to operation S260 to output a message without playing the first contents.

In operation S260, a message that the first contents are suspicious may be outputted. Additionally, instead of playing the first contents, a message for asking whether to play the second contents may be outputted. Additionally, a message may not be outputted and omitted. Even when the first contents are suspicious, a message for asking whether to continuously play the first contents may be outputted.

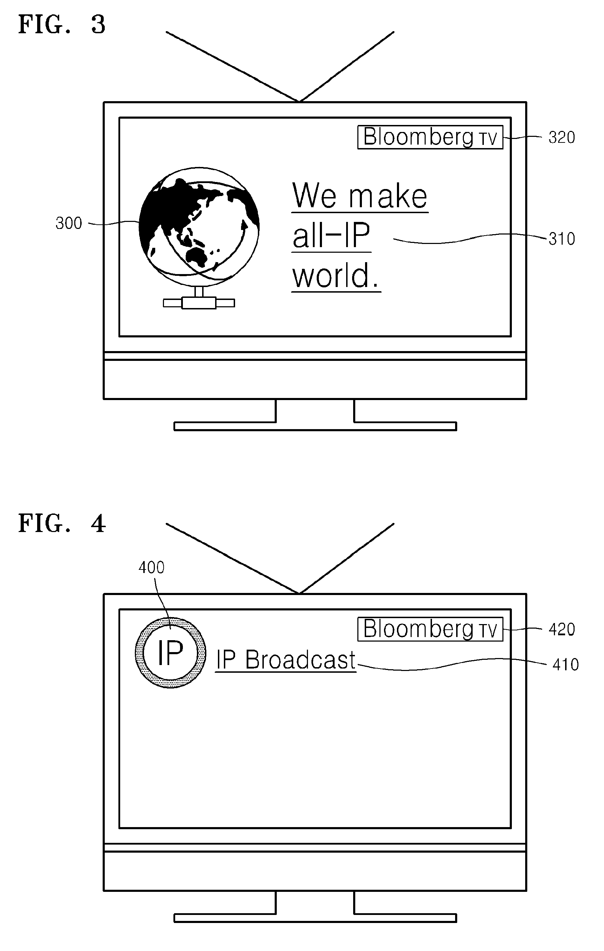

FIG. 3 is a view of when broadcast contents including an added advertisement are received by an IPTV and displayed to a user according to an embodiment of the present invention.

In this embodiment, first contents are assumed as broadcast contents received through the IP network 140 and second contents are assumed as broadcast contents received through the broadcast network 130 in correspondence to the first contents.

As shown in FIG. 3, according to an embodiment of the present invention, a screen displayed to a user includes a first advertisement 300, a second advertisement 310, and a channel logo 320.

The first advertisement 300 is an advertisement portion added to broadcast contents by a first intermediary provider.

The second advertisement 310 is an advertisement phrase portion added to the broadcast contents added by the first intermediary provider. The second advertisement 310 may be added to the broadcast contents added by the first intermediary provider. Or the second advertisement 310 may be added by a second intermediary provider.

The channel logo 320 as a logo that a provider using broadcast channels uses to display its broadcast channels is additional information added to the first contents or the second contents.

The first advertisement 300 and the second advertisement 310 are not related to the broadcast contents. When a similarity between the first contents and the second contents is determined, including a similarity between the first advertisement 300 and the second advertisement 310, even when the first contents and the second contents are the same, their similarity may be less than a critical value. In such a case, it may be determined that the first contents and the second contents may be different from each other. Accordingly, it is desirable to determine a similarity between the first contents and the second contents, excluding the first advertisement 300 and the second advertisement 310.

Although the channel logo 320 is irrelevant to the broadcast contents, it is added, via a broadcast network, by a provider which provides broadcast channels by using broadcast channels. Therefore, during a similarity determination, a similarity may be determined while not including the channel logo 320. In some cases, a similarity may be determined excluding the channel logo 320.

The first advertisement 300, the second advertisement 310, and the channel logo 320 may be added to a frame of the first contents or the second contents. In some cases, the first advertisement 300, the second advertisement 310, and the channel logo 320 may be added to a newly generated frame different from a frame of the first contents or the second contents.

Unlike FIG. 3, an advertisement may be in a subtitle advertisement format at the top and bottom of a screen and added to a frame of the first contents or the second contents.

A process of removing the first advertisement 300, the second advertisement 310, and the channel logo 320 may be performed before determining the similarity. When the first advertisement 300, the second advertisement 310, and the channel logo 320 are added to the first contents or the second contents, an identifier for identifying additional information in the first contents and the second contents may be included in the first contents or the second contents.

In order to remove the first advertisement 300, the second advertisement 310, and the channel logo 320 from the first contents and the second contents, it is necessary to confirm the existence of additional information through the identifier and then exclude the additional information.

FIG. 4 is a view of when broadcast contents including an added symbol are received in an IPTV and displayed to a user according to an embodiment of the present invention.

In this embodiment, first contents are assumed as broadcast contents received through the IP network 140 and second contents are assumed as broadcast contents received through the broadcast network 130 in correspondence to the first contents.

As shown in FIG. 4, according to an embodiment of the present invention, a screen displayed to a user includes a first symbol 400, a second symbol 410, and a channel logo 420.

The first symbol 400 is a symbol indicating the first intermediary provider. The second symbol 410 is a symbol indicating the second intermediary provider. The first symbol 400 and the second symbol 410 are not related to the first contents or the second contents. When broadcast contents are provided through an IP network, unlike the case in which broadcast contents are provided through a broadcast network, since strict permission criteria are not applied, anyone may provide broadcast contents. A provider providing broadcast contents through an IP network may be identical to or different from a provider providing broadcast contents. When a provider providing broadcast contents through a broadcast network is different from a provider providing broadcast contents through an IP network, broadcast contents provided from a provider through a broadcast network may be processed and provided, or similar broadcast contents may be directly generated and provided. When a provider providing broadcast contents through an IP network is different from a provider providing broadcast contents through a broadcast network, it may add a symbol representing itself to the first contents.

The channel logo 420 is a logo that a provider using broadcast channels uses to display its broadcast channels and is additional information added to the first contents or the second contents.

When a similarity is determined including the first symbol 400 and the second symbol 410, even if the first contents and the second contents are the same, it is determined that the first and second contents are forged, so that the first content may not be played. Therefore, a process for removing the first symbol 400 and the second symbol 410 may be performed before a similarity is determined. In order to remove the first symbol 400 and the second symbol 410, an identifier for identifying additional information may be included. The first symbol 400 and the second symbol 410 may be identified and removed through an identifier for identifying additional information of the first contents and the second contents.

The channel logo 420 is identical to the channel logo 320. A similarity may be determined while not including the channel logo 420. In some cases, a similarity may be determined excluding the channel log 420.

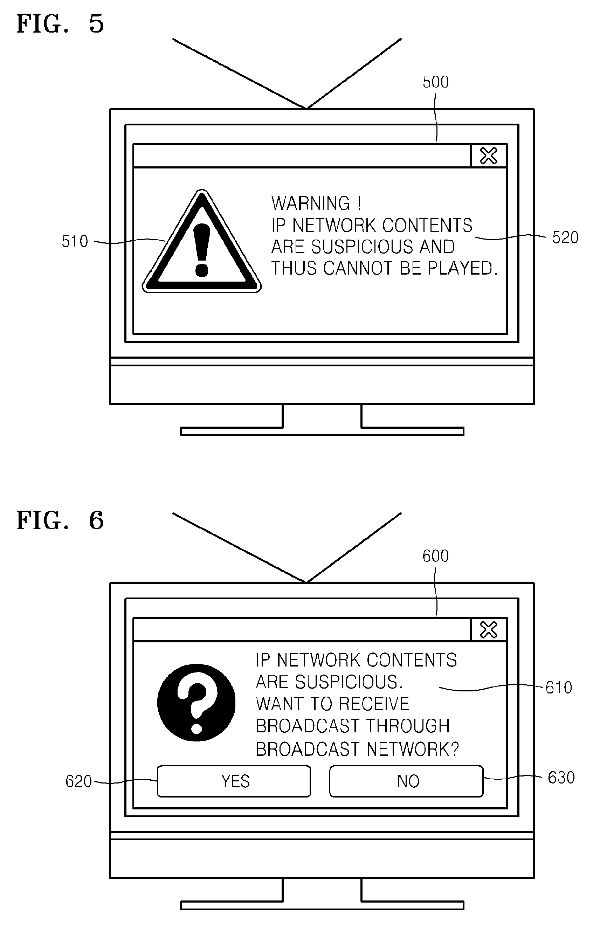

FIG. 5 is a view illustrating a screen outputting a message when it is determined that broadcast contents received through an IP network are forged according to an embodiment of the present invention.

As shown in FIG. 5, according to an embodiment of the present invention, a screen displayed to a user includes a message 500, a warning sign 510, and a warning phrase 520.

In this embodiment, first contents are assumed as broadcast contents received through the IP network 140 and second contents are assumed as broadcast contents received through the broadcast network 130 in correspondence to the first contents.

As shown in FIG. 2, when it is determined that first contents received through an IP network are forged, without outputting any contents to a user, the first contents are not played, so that it is necessary to notify the user that the device will not output the first contents to the user.

As shown in FIG. 5, a message 500 for notifying the reason of no playback to the user may be outputted. Such a message includes a warning sign 510 and a warning phrase 520. The message 500 may be outputted through a display. In some cases, the message 500 for notifying that the first contents cannot be played may be outputted in the form of a beep.

The warning display 510 is a display for warning that the first contents are suspicious. Through the warning display 510, a user may immediately recognize that the reliability of IP network broadcast contents has deteriorated.

The warning phrase 520 is a phrase indicating that the first contents are suspicious. Through the warning phrase 520, a user may recognize that the reliability of IP network broadcast contents has deteriorated.

FIG. 6 is a view illustrating a screen outputting a message when it is determined that broadcast contents received through an IP network are forged according to an embodiment of the present invention.

As shown in FIG. 6, according to an embodiment of the present invention, a message 600 is displayed on a screen. The message 600 includes a request phrase 610, a first button 620, and a second button 630.

The first button 620 and the second button 630 are portions of the display that receive an input response from a user based on whether the user wishes to receive broadcast contents through a broadcast network. When a user selects the first button 620, broadcast contents are received through a broadcast network. When a user selects the second button 630, broadcast contents are not received through a broadcast network. A user may use a touch input to select the first button 620 or the second button 630. Additionally, a user may select the first button 620 or the second button 630 by pressing a button on a remote control. When it is determined that broadcast contents received through an IP network are forged, a user wants to watch unforged contents instead of playing the received forged broadcast contents. Accordingly, it is desirable to play the contents received through a broadcast network instead of the contents received through an IP network.

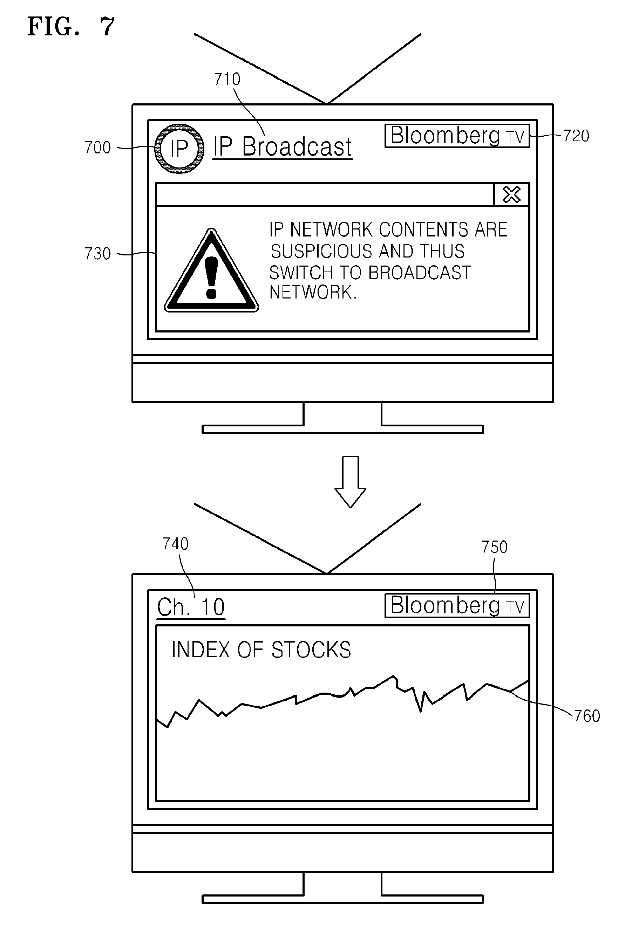

FIG. 7 is a view illustrating a screen playing broadcast contents received through a broadcast network when it is determined that broadcast contents received through an IP network are forged according to an embodiment of the present invention.

As shown in FIG. 7, according to an embodiment of the present invention, a screen displayed to a user includes a first symbol 700, a second symbol 710, a first channel logo 720, a switching message 730, a channel display 750, and broadcast contents 760.

When it is determined that broadcast contents received through an IP network are forged, the switching message 730 notifying a user that contents received through a broadcast network are played instead of the contents received through the IP network may be outputted as shown at the top of FIG. 7 before playing the broadcast network received broadcast contents 760 corresponding to the IP network received broadcast contents. A message notifying a user that contents received through a broadcast network are played may not be outputted.

When it is determined that broadcast contents received through an IP network are forged, the broadcast network received broadcast contents 760 corresponding to the IP network received broadcast contents are played as shown at the bottom of FIG. 7.

The first symbol 700 and the second symbol 710 of FIG. 7 are the same as those 400 and 410 above. The first symbol 700 and the second symbol 710 may be added by an intermediary provider.

The first channel logo 720 and the second channel logo 750 of FIG. 7 are the same as the channel logo 420 above. The first channel logo 720 and the second channel logo 750 of FIG. 7, added by a provider using broadcast channels, may be displayed with the same position and size regardless of whether broadcast contents are received through an IP network or a broadcast network. In some cases, the first channel logo 720 and the second channel logo 750 of FIG. 7 may not be displayed or may be displayed with a different size or position.

The switching message 730 is a message for notifying a user that broadcast contents will be played through a broadcast network before playing the broadcast contents received through the broadcast network. In some cases, such a message may not be displayed.

A channel of a broadcast network is temporarily displayed on a screen through the channel display 740. When a channel is switched, the providing of broadcast contents to a user through a broadcast network may be temporarily displayed, like the channel display 740. In some cases, such a channel switching may not be displayed.

The broadcast contents 760 of FIG. 7 may display broadcast contents provided through a broadcast network.

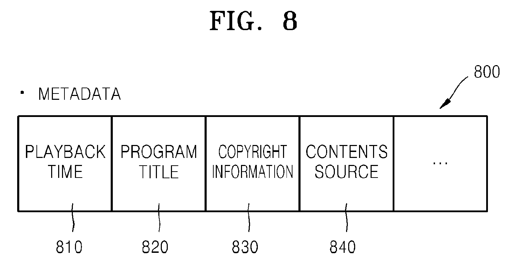

FIG. 8 is a view illustrating a structure of metadata representing broadcast contents according to an embodiment of the present invention.

As shown in FIG. 8, the metadata 800 includes at least one of a playback time 810, a program title 820, copyright information 830, and a contents source 840.

The playback time 810 is a time for playing broadcast contents. If the playback time 810 of broadcast contents received through an IP network does not differ from the playback time of broadcast contents received through a broadcast network significantly, it is regarded that broadcast contents received through an IP network are similar to broadcast contents received through a broadcast network.

The program title 820 represents summarized broadcast contents. When the program titles of broadcast contents received through an IP network and a broadcast network are the same, it is regarded that the broadcast contents are similar to each other.

The copyright information 830 is information indicating to whom the copyright of broadcast contents belongs. The copyright of corresponding broadcast contents mostly belongs to the provider of the broadcast contents. However, even when a different provider has the copyright, since the broadcast contents are the same, copyright information may be the same regardless of whether broadcast contents are provided through an IP network or a broadcast network. When the copyright information 830 indicates that broadcast contents received through an IP network and broadcast contents received through a broadcast network are the same, it is regarded that the two broadcast contents are similar to each other.

The contents source 840 is information that indicates which contents source provides broadcast contents. The source of broadcast contents mostly belongs to the provider of the broadcast contents. Accordingly, when the sources 840 of broadcast contents received through an IP network and broadcast contents received through a broadcast network are the same, it is regarded that the broadcast contents are similar to each other.

It is desirable to determine a similarity on the basis of at least one of the playback time 810, the program title 820, the copyright information 830, and the contents source 840 in the metadata 800.

When a provider providing broadcast contents through a broadcast network is different from a provider providing broadcast contents through an IP network, the IP network broadcast contents provider receives broadcast contents through a broadcast network, and then processes the received broadcast contents to modify the metadata 800. Accordingly, the determination of similarity may not only be made based on the metadata 800. When a similarity is determined based on the metadata 800, a provider providing broadcast contents through an IP network may edit the metadata 800. Accordingly, a similarity may be determined while only putting a small weighted value on the metadata 800.

When a similarity is determined based on each of information of the metadata 800, difference weighted values may be provided. For example, when a similarity is determined based on the playback time 810, even when the broadcast contents are the same based on an advertisement added thereto, the similarity may be determined to be low. Accordingly, when a similarity is determined based on the playback time 810, a weighted value may be low. However, when a similarity is determined based on the program title 820 or the copyright information 830, since the similarity is relatively less affected by an advertisement added to broadcast contents, a weighted value may be high.

When at least one element of meta data of the broadcast contents received through an IP network and at least one element of meta data of a broadcast network are compared and are determined as being different, it is determined immediately that the broadcast contents are different from each other, without additional determination, so that the contents received through the IP network may not be played.

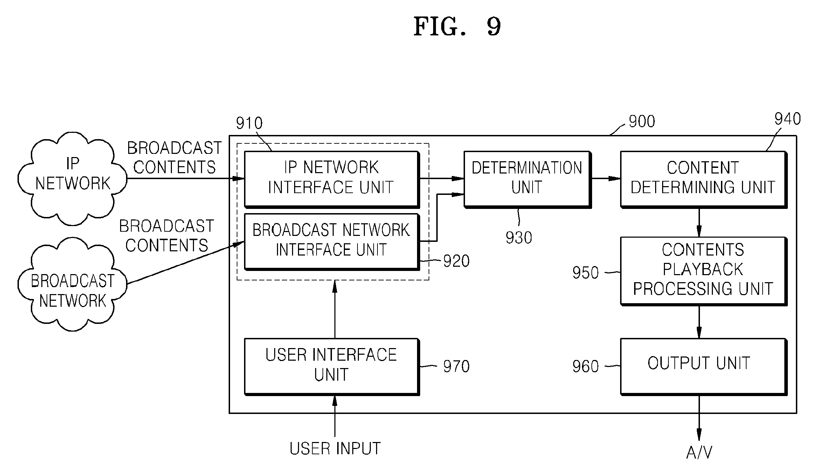

FIG. 9 is a view illustrating a device 900 processing broadcast contents according to an embodiment of the present invention.

In this embodiment, first contents are assumed as broadcast contents received through the IP network 140 and second contents are assumed as broadcast contents received through the broadcast network 130 in correspondence to the first contents.

As shown in FIG. 9, an IP network interface unit 910 and a broadcast network interface unit 920 receive broadcast contents through an IP network and a broadcast network, respectively. However, as shown in FIG. 9, although the IP network interface unit 910 and the broadcast network interface unit 920 are separated from each other, they may be integrated into one as shown in the dotted line of FIG. 9.

As shown in FIG. 9, a determination unit 930 determines a similarity between contents received through an IP network and a broadcast network and outputs a determination result by using as an input the contents received by the IP network interface unit 910 and the broadcast network interface unit 920 through the IP network and the broadcast network.

Additionally, before determining a similarity, it is desirable that a synchronization process between the received contents may be performed first.

When synchronization between received contents has failed, it is determined immediately that the broadcast contents received through an IP network are forged, without determining a similarity between the contents.

Since there is somewhat of a difference between the broadcast data received through an IP network and the format or metadata 800 of broadcast contents received through a broadcast network, their similarity may be determined by performing a format conversion of the broadcast contents or extracting only necessary information, based on an identifier of the metadata 800.

The determination unit 930 may determine a similarity, after removing from the first contents and the second contents, additional information generated by at least one of a communication provider, a provider using broadcast channels, a terrestrial broadcast provider, a satellite broadcast provider, a cable broadcast provider, a DMB provider, an IPTV provider, and a broadcast contents provider.

Additionally, a contents authenticity determining unit 940 compares a similarity of an input (i.e., an output of a determination unit) and a critical value and outputs a determination result on the basis of the comparison result. If the input is greater than the critical value, a signal for controlling playback is outputted to a contents playback processing unit. The contents playback processing unit 950 performs processing to play broadcast contents by using an output of the contents authentication determining unit 940 as an input. The broadcast contents may be processed in the contents playback processing unit 950 through a decoding process for playback, and then the decoded result may be outputted to the output unit 960. The output unit 960 may output the broadcast contents in an audio or video format on the basis of the output of the contents playback processing unit 950.

The user interface unit 970 is for receiving an input from a user. A signal for receiving an input from a user and controlling whether to receive first contents may be delivered to the IP network interface unit 910 and the broadcast network interface unit 920.

Although a few preferred embodiments have been shown and described, it will be appreciated by those skilled in the art that various changes and modifications might be made without departing from the scope of the invention, as defined in the appended claims.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A method of processing broadcast contents, the method comprising:
receiving second contents corresponding to first contents among contents provided through a broadcast network as a user input requesting a reception of the first contents through an IP network is received;
determining a similarity between the first contents and the second contents; and
determining an authenticity of the first contents on the basis of the determined similarity.

2. The method of claim 1, further comprising, when it is determined that the first contents are forged, playing the second contents instead of the first contents that a user requests.

3. The method of claim 1, further comprising, when it is determined that the first contents are forged, outputting a message indicating that the first contents are forged.

4. The method of claim 1, further comprising, when it is determined that the first contents are forged, outputting a message asking a user whether to play the second contents instead of the first contents.

5. The method of claim 1, wherein the determining of the similarity comprises determining a similarity between the first contents and the second contents, after excluding additional information generated by at least one of a communication provider, a provider using broadcast channels, a terrestrial broadcast provider, a satellite broadcast provider, a cable broadcast provider, a Digital Multimedia Broadcasting (DMB) provider, an Internet protocol television (IPTV)provider, a provider of the first contents, and a provider of the second contents.

6. The method of claim 1, wherein the determining of the similarity is performed on a basis of metadata of the first contents and metadata of the second contents.

7. The method of claim 1, wherein the determining of the similarity is performed on a basis of a similarity between each frame of the first contents and each frame of the second contents.

8. A device for processing broadcast contents in an IPTV, the device comprising:
a user interface unit receiving a user input for requesting a reception of first contents through an IP network;
an IP network interface unit receiving the first contents through the IP network;
a broadcast network interface unit receiving second contents corresponding to the first contents among contents provided through a broadcast network;
a determination unit determining a similarity between the first contents and the second contents; and
a contents authenticity determining unit determining an authenticity of the first contents on the basis of the determined similarity.

9. The device of claim 8, further comprising an output unit playing and outputting the second contents instead of the first contents that a user requests when it is determined, based on the determination of the authenticity, that the first contents are forged.

10. The device of claim 8, further comprising an output unit outputting a message indicating that the first contents are forged when it is determined, based on the determination of the authenticity, that the first contents are forged.

11. The device of claim 8, further comprising an output unit outputting a message asking whether to play the second contents instead of the first contents to a user when it is determined, based on the determination of the authenticity, that the first contents are forged.

12. The device of claim 8, wherein the determination unit determines a similarity between the first contents and the second contents, after excluding additional information generated by at least one of a communication provider, a provider using broadcast channels, a terrestrial broadcast provider, a satellite broadcast provider, a cable broadcast provider, a Digital Multimedia Broadcasting (DMB) provider, an Internet protocol television (IPTV)provider, a provider of the first contents, and a provider of the second contents.

13. The device of claim 8, wherein the determination unit determines the similarity on a basis of metadata of the first contents and metadata of the second contents.

14. The device of claim 8, wherein the determination unit determines the similarity on a basis of a similarity between each frame of the first contents and each frame of the second contents.

15. A non-transitory computer readable recording medium having a computer program recorded thereon, which, when executed by a computer, implements the method of one of claims 1 to 7.
